# EUROPÄISCHE PATENTSCHRIFT

(11) **EP 2 809 560 B1**
(45) Veröffentlichungstag und Bekanntmachung des Hinweises auf die Patenterteilung: **13.04.2016**
(21) Anmeldenummer: 12809666.6
(22) Anmeldetag: 10.12.2012
(51) Int. Cl.: B60T 17/22, B60Q 1/44

(54) **BREMSBETÄTIGUNGS-ERKENNVORRICHTUNG UND VERFAHREN ZUM FESTSTELLEN EINER BETÄTIGUNG EINES BREMSBETÄTIGUNGSELEMENTS EINES BREMSSYSTEMS**
BRAKE ACTUATION RECOGNITION DEVICE AND METHOD FOR DETECTING AN ACTUATION OF A BRAKE ACTUATING ELEMENT OF A BRAKE SYSTEM
DISPOSITIF DÉTECTEUR DE LA COMMANDE DE FREIN ET PROCÉDÉ DE DÉTERMINATION DE L'ACTIONNEMENT D'UN ÉLÉMENT DE COMMANDE DE FREIN D'UN SYSTÈME DE FREINAGE

(30) Priorität: 01.02.2012 DE 102012201436
(43) Veröffentlichungstag der Anmeldung: 10.12.2014
(73) Patentinhaber: Robert Bosch GmbH, 70442 Stuttgart (DE)
(72) Erfinder: BRUEX, Thomas, 71720 Obersrebfeld (DE); MOESSNER, Simon, 74189 Weinsberg (DE); TOKIC, Branimir, 71672 Marbach am Neckar (DE)
(86) Internationale Anmeldenummer: PCT/EP2012/074885
(87) Internationale Veröffentlichungsnummer: WO 2013/113436

(56) Entgegenhaltungen:
- DE-A1- 19 925 794
- DE-A1-102006 053 701
- FR-A1- 2 873 967

## Beschreibung

Die Erfindung betrifft eine Bremsbetätigungs-Erkennvorrichtung und eine Überwachungsvorrichtung für einen Bremskraftverstärker mit einer Druckkammer. Ebenso betrifft die Erfindung ein Steuergerät und ein Bremssystem. Des Weiteren betrifft die Erfindung ein Verfahren zum Feststellen einer Betätigung eines Bremsbetätigungselements eines Bremssystems und ein Verfahren zur Drucküberwachung in einer Druckkammer eines Bremskraftverstärkers.

### Stand der Technik

In der DE 199 25 794 A1 ist ein Verfahren zum Überwachen eines Differenzdrucks einer Vakuumkammer eines Bremskraftverstärkers gegenüber einem Atmosphärendruck beschrieben. Der Differenzdruck wird lediglich bei einem nicht betätigten Bremspedal überwacht. Eine Nicht-Betätigung des Bremspedals soll mittels eines Sensors des Bremslichtschalters erkennbar sein.

### Offenbarung der Erfindung

Die Erfindung schafft eine Bremsbetätigungs-Erkennvorrichtung mit den Merkmalen des Anspruchs 1, eine Überwachungsvorrichtung für einen Bremskraftverstärker mit einer Druckkammer mit den Merkmalen des Anspruchs 3, ein Steuergerät mit den Merkmalen des Anspruchs 6, ein Bremssystem mit den Merkmalen des Anspruchs 8, ein Verfahren zum Feststellen einer Betätigung eines Bremsbetätigungselements eines Bremssystems mit den Merkmalen des Anspruchs 9 und ein Verfahren zur Drucküberwachung in einer Druckkammer eines Bremskraftverstärkers mit den Merkmalen des Anspruchs 13.

### Vorteile der Erfindung

Die vorliegende Erfindung ermöglicht ein verlässliches Erkennen einer vorgegebenen Mindestbetätigung eines Bremsbetätigungselements, wie beispielsweise eines Bremspedals. Dabei kann sicher zwischen einem Vorliegen des Bremsbetätigungselements in einem Betätigungszustand unter dem Mindestbetätigungszustand und einem Vorliegen des Bremsbetätigungselements in einem Betätigungszustand über dem Mindestbetätigungszustand unterschieden werden. Unter Berücksichtigung der auf diese Weise gewonnen Informationen bezüglich des Betätigungszustands des Bremsbetätigungselements können Funktionen, Vorrichtungen und/oder Geräte eines Fahrzeugs in einen bezüglich des Betätigungszustands des Bremsbetätigungselements vorteilhaften Modus gesteuert werden. Die vorliegende Erfindung kann somit dazu genutzt werden, eine Funktionsweise einer Vielzahl von Funktionen, Vorrichtungen und/oder Geräten eines Fahrzeugs im Hinblick auf eine mögliche Betätigung des Bremsbetätigungselements zu optimieren.

Es wird darauf hingewiesen, dass die vorliegende Erfindung ein Erkennen des Mindestbetätigungszustands des Bremsbetätigungselements ohne die Verwendung eines Bremslichtschalters ermöglicht. Somit kann die vorliegende Erfindung in einer besonders vorteilhaften Ausführungsform dazu genutzt werden, den von dem Stand der Technik benötigten Sensor des Bremslichtschalters einzusparen. Außerdem benötigt ein Ausführen der vorliegenden Erfindung keine Information bezüglich eines in einem Hauptbremszylinder vorliegenden Vordrucks.

Vorzugsweise umfasst die Bremsbetätigungs-Erkennvorrichtung eine Differenziereinrichtung, mittels welcher eine zeitliche Ableitung der bereitgestellten Ist-Größe bezüglich des in der Druckkammer des Bremskraftverstärkers vorliegenden Drucks als Änderungsgröße festlegbar und an die Auswerteeinrichtung bereitstellbar ist. Die bereitgestellte Ist-Größe kann beispielsweise ein gemessener Differenzdruck einer als Vakuumkammer oder als Arbeitskammer ausgebildeten Druckkammer des Bremskraftverstärkers gegenüber einem Atmosphärendruck sein. Somit kann zum Ausführen der vorliegenden Erfindung eine Größe benutzt werden, welche für eine Vielzahl von weiteren Funktionen, wie beispielsweise einer Drucküberwachung in der jeweiligen Druckkammer und/oder einem Berechnen eines Ansteuerpunktes (z.B. eines Hydroaggregats) eines Bremssystems zum Unterstützen des pneumatischen Bremskraftverstärkers, verwendet wird.

Die oben genannten Vorteile sind anwendbar auf eine Überwachungsvorrichtung für einen Bremskraftverstärker mit einer Druckkammer. Während eines Betriebs der Überwachungsvorrichtung kann somit sichergestellt werden, dass die Überwachungsvorrichtung nicht fälschlicherweise eine von einem Soll-Größenbereich abweichende Ist-Größe bezüglich des in der Druckkammer des Bremskraftverstärkers vorliegenden Drucks, welche auf eine Betätigung des Bremsbetätigungselements zurückzuführen ist, als einen die Druckabweichung auslösenden Fehler deutet. Somit ist auch in Situationen mit einer häufigen und/oder dynamischen Bremsbetätigung sicher unterbunden/unterbindbar, dass die Überwachungsvorrichtung das damit verbundene starke Absinken des Differenzdrucks in der Druckkammer fälschlicherweise als Fehler deutet. Damit ist verhinderbar, dass Funktionen, wie beispielsweise die Ansteuerung einer elektrischen Vakuumpumpe aufgrund einer fälschlich festgestellten Beeinträchtigung der Druckeinstellung in der Druckkammer deaktiviert werden und somit den Fahrer für eine längere Zeit beim Abbremsen des Fahrzeugs nicht mehr kraftmäßig unterstützen. Außerdem wird der Fahrer nicht durch eine falsche Fehlerwarnung zu einem unnötigen Aufsuchen einer Werkstatt angeregt.

Beispielsweise ist die Steuereinrichtung dazu ausgelegt, bei einem Empfang des Über-Mindestbetätigung-Informationssignals als Informationssignal die Drucküberwachungseinrichtung zumindest für eine vorgegebene Mindestbetriebszeit aus dem ersten Betriebsmodus in den zweiten Betriebsmodus zu steuern. Alternativ kann die Steuereinrichtung dazu ausgelegt sein, eine Anzahl der innerhalb eines vorgegebenen Zeitintervalls als Informationssignale empfangenen Über-Mindestbetätigung-Informationssignal zu ermitteln, und, sofern die ermittelte Anzahl zumindest einer Höchstanzahl entspricht, die Drucküberwachungseinrichtung aus dem ersten Betriebsmodus in den zweiten Betriebsmodus zu steuern. Der Betriebsmodus der Drucküberwachungseinrichtung ist somit auf einfache Weise und verlässlich hinsichtlich einer möglichen Betätigung des Bremsbetätigungselements optimierbar.

Die oben aufgezählten Vorteile sind auch mittels eines Steuergeräts mit einer derartigen Überwachungsvorrichtung realisierbar. Vorzugsweise ist das Steuergerät als Verbrennungsmotor-Steuergerät, als Elektromotor-Steuergerät und/oder als ESP-Steuergerät ausgebildet. Somit können die oben genannten Vorteile mittels einer vergleichsweise wenig Bauraum beanspruchenden und leicht montierbaren kompakten Einheit gewährleistet werden.

Außerdem sind die Vorteile auch realisierbar durch ein Bremssystem mit einer entsprechenden Bremsbetätigungs-Erkennvorrichtung, einer korrespondierenden Überwachungsvorrichtung und/oder einem derartigen Steuergerät.

Des Weiteren können die Vorteile auch gewährleistet werden durch ein Ausführen eines korrespondierenden Verfahrens zum Feststellen einer Betätigung eines Bremsbetätigungselements eines Bremssystems.

Schließlich sind die Vorteile auch realisierbar durch ein Ausführen des entsprechenden Verfahrens zur Drucküberwachung in einer Druckkammer eines Bremskraftverstärkers.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Bremsbetätigungs-Erkennvorrichtung;
- Fig. 2: eine schematische Darstellung einer Ausführungsform der Überwachungsvorrichtung für einen Bremskraftverstärker mit einer Druckkammer;
- Fig. 3: ein Flussdiagramm zum Darstellen einer Ausführungsform des Verfahrens zum Feststellen einer Betätigung eines Bremsbetätigungselements eines Bremssystems;
- Fig. 4a bis 4c: ein Flussdiagramm und zwei Koordinatensysteme zum Darstellen einer ersten Ausführungsform des Verfahrens zur Drucküberwachung in einer Druckkammer eines Bremskraftverstärkers; und
- Fig. 5a und 5b: zwei Koordinatensysteme zum Darstellen einer zweiten Ausführungsform des Verfahrens zur Drucküberwachung in einer Druckkammer eines Bremskraftverstärkers.

### Ausführungsformen der Erfindung

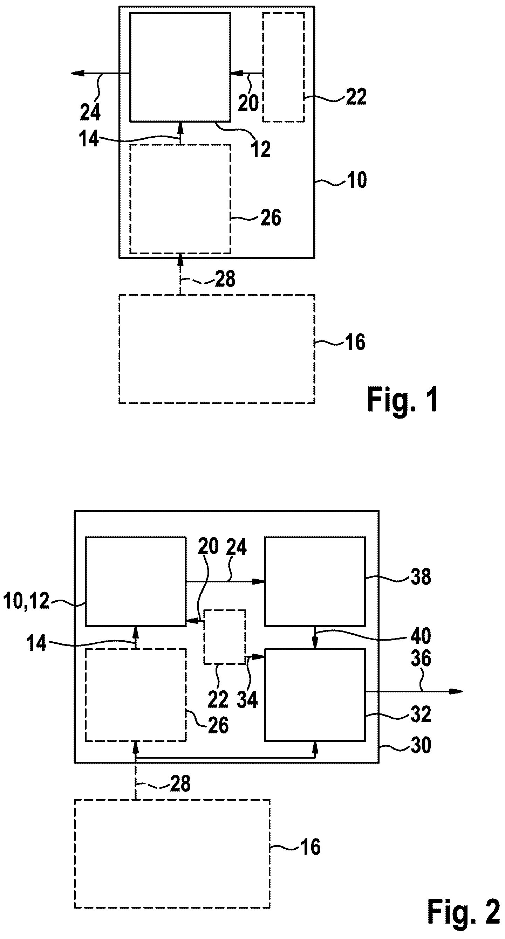

Fig. 1 zeigt eine schematische Darstellung einer Ausführungsform der Bremsbetätigungs-Erkennvorrichtung.

Die in Fig. 1 schematisch dargestellte Bremsbetätigungs-Erkennvorrichtung 10 weist eine Auswerteeinrichtung 12 auf, mittels welcher mindestens eine (intern oder extern) bereitgestellte Änderungsgröße 14 bezüglich einer zeitlichen Änderung einer (unten genauer beschriebenen) Ist-Größe bezüglich eines in einer Druckkammer 16 eines (nicht weiter skizzierten) Bremskraftverstärkers vorliegenden Drucks empfangbar ist. Die mindestens eine bereitgestellte Änderungsgröße 14 ist mittels der Auswerteeinrichtung 12 mit einem vorgegebenen Vergleichsgrößenbereich 20 vergleichbar. (Der Vergleichsgrößenbereich 20 kann beispielsweise von einer Speichereinheit 22 an die Auswerteeinrichtung 12 ausgegeben sein.) Beispiele für die mindestens eine Änderungsgröße 14 und den Vergleichsgrößenbereich 20 sind unten noch angegeben.

Sofern die mindestens eine bereitgestellte Änderungsgröße 14 in dem Vergleichsgrößenbereich 20 liegt, ist die Auswerteeinrichtung 12 dazu ausgelegt, festzulegen, dass ein an dem Bremssystem angeordnetes (nicht skizziertes) Bremsbetätigungselement, wie beispielsweise ein Bremspedal, in einem Betätigungszustand unter einem vorgegebenen Mindestbetätigungszustand vorliegt. Insbesondere kann mittels der Auswerteeinrichtung 12 durch eine geeignete Festlegung des Vergleichsgrößenbereichs 20 in dieser Situation festlegbar sein, dass das Bremsbetätigungselement in seinem Nicht-Betätigungszustand vorliegt. Ein entsprechendes Unter-Mindestbetätigung-Informationssignal ist als Informationssignal 24 mittels der Auswerteeinrichtung 12 ausgebbar.

Ebenso ist, sofern die mindestens eine bereitgestellte Änderungsgröße 14 von dem Vergleichsgrößenbereich 20 abweicht, mittels der Auswerteeinrichtung 12 festlegbar, dass das Bremsbetätigungselement in einem Betätigungszustand über dem vorgegebenen Mindestbetätigungszustand vorliegt. Auch in dieser Situation ist ein entsprechendes Über-Mindestbetätigung-Informationssignal als Informationssignal 24 ausgebbar. Beispielsweise kann das Informationssignal 24 als Über-Mindestbetätigung-Informationssignal aussagen, dass das Bremsbetätigungselement in einem Aktiven-Betätigungszustand vorliegt.

In einer vorteilhaften Weiterbildung weist die Bremsbetätigungs-Erkennvorrichtung 10 auch eine Differenziereinrichtung 26 auf, mittels welcher eine zeitliche Ableitung einer bereitgestellten Ist-Größe 28 bezüglich des in der Druckkammer 16 des Bremskraftverstärkers vorliegenden Drucks als Änderungsgröße 14 festlegbar und an die Auswerteeinrichtung 12 bereitstellbar ist. Auch für die Ist-Größe 28 werden Ausführungsbeispiele unten noch angegeben.

Fig. 2 zeigt eine schematische Darstellung einer Ausführungsform der Überwachungsvorrichtung für einen Bremskraftverstärker mit einer Druckkammer.

Die nachfolgend beschriebene Überwachungsvorrichtung 30 ist dazu ausgelegt, mit einem Bremskraftverstärker, welcher den Fahrer beim Abbremsen seines Fahrzeugs unterstützt, zusammen zu wirken. Vorzugsweise ist der lediglich mittels seiner Druckkammer 16 wiedergegebene Bremskraftverstärker derart ausgelegt, dass er seine zum Aufbau eines zusätzlichen Bremsdrucks aufzubringende Energie aus einem Unterdruck in der Druckkammer 16 bezieht. Man kann dies auch so umschreiben, dass die mittels des Bremskraftverstärkers aufbringbare (maximale) Bremskraftverstärkung direkt abhängig von einem Druckniveau/Unterdruckniveau in der Druckkammer 16, beispielsweise in einer als Vakuumkammer des Bremskraftverstärkers ausgebildeten Druckkammer 16, ist. Es wird jedoch darauf hingewiesen, dass die Einsetzbarkeit der im Weiteren beschriebenen Überwachungsvorrichtung 30 nicht auf eine bestimmte Ausbildung des Bremskraftverstärkers ausgebildet ist. Auf den Aufbau und die Funktionsweise des mit der Druckkammer 16 ausgestatteten Bremskraftverstärkers wird deshalb hier im Weiteren nicht eingegangen.

Die Überwachungsvorrichtung 30 umfasst die oben schon beschriebene Bremsbetätigungs-Erkennvorrichtung 10 und vorzugsweise eine extern oder intern zu der Bremsbetätigungs-Erkennvorrichtung 10 angeordnete Differenziereinrichtung 26. Die Überwachungsvorrichtung 30 weist zusätzlich eine Drucküberwachungseinrichtung 32 auf, welche in einem Erstbetriebsmodus dazu ausgelegt ist, die bereitgestellte Ist-Größe 28 bezüglich des in der Druckkammer 16 des Bremskraftverstärkers vorliegenden Drucks mit einem vorgegebenen Soll-Größenbereich 34 zu vergleichen. (Der Soll-Größenbereich 34 kann beispielsweise von der extern oder intern zu der Bremsbetätigungs-Erkennvorrichtung 10 angeordneten Speichereinheit 22 bereitgestellt werden.)

Sofern die Drucküberwachungseinrichtung 32 in dem ersten Betriebsmodus vorliegt und die bereitgestellte Ist-Größe 28 von dem vorgegebenen Soll-Größenbereich 34 abweicht, ist mittels der Drucküberwachungseinrichtung 32 eine entsprechende Druckabweichungs- und/oder Warninformation 36 ausgebbar. Mittels der Druckabweichungs- und/oder Warninformation 36 kann mindestens eine Fahrzeugkomponente bezüglich der in der Druckkammer 16 vorliegenden Druckabweichung von dem (bevorzugten) Soll-Größenbereich 34 informiert werden. Da bei einem Vorliegen der Druckabweichung für eine bestimmte Zeit, beispielsweise bei einem Druck in der Druckkammer 16 unterhalb einer Fehlerschwelle, mit einer hohen Wahrscheinlichkeit auf das Vorliegen eines Fehlers an dem Bremskraftverstärker geschlossen werden kann, kann die mindestens eine Fahrzeugkomponente mittels der Druckabweichungs- und/oder Warninformation 36 so angesteuert werden, dass sie ihre Funktionsweise an die beeinträchtigte Einsetzbarkeit des Bremskraftverstärkers anpasst. Ebenso kann mittels der Druckabweichungs- und/oder Warninformation 36 mindestens eine Funktion einer Ansteuerelektronik einer elektrischen Vakuumpumpe, mittels welcher der Druck in der Druckkammer 16 aufbaubar ist, deaktiviert werden. Des Weiteren kann mittels einer Ausgabe der Druckabweichungs- und/oder Warninformation 36 an eine fahrzeuginterne Warneinrichtung der Fahrer bezüglich der Funktionsbeeinträchtigung/des Ausfalls des Bremskraftverstärkers gewarnt/informiert werden. Somit kann der Fahrer seine Fahrweise an die Funktionsbeeinträchtigung/den Ausfall des Bremskraftverstärkers anpassen und rechtzeitig eine Werkstatt zur Behebung des erkannten Fehlers aufsuchen.

Die Drucküberwachungseinrichtung 32 ist zusätzlich in einen zweiten Betriebsmodus steuerbar, in welchem trotz mindestens einer von dem vorgegebenen Soll-Größenbereich 34 abweichenden Ist-Größe 28 eine Ausgabe der Druckabweichungs- und/oder Warninformation 36 unterbunden ist. Zum vorteilhaften Ansteuern der Drucküberwachungseinrichtung 32 ist die Überwachungsvorrichtung 30 mit einer Steuereinrichtung 38 ausgestattet, mittels welcher die Drucküberwachungseinrichtung 32 unter Berücksichtigung des von der Bremsbetätigungs-Erkennvorrichtung 10 ausgegebene Informationssignals 24 durch Ausgabe eines Steuersignals 40 zumindest in dem ersten Betriebsmodus oder in den zweiten Betriebsmodus steuerbar ist.

Durch das vorteilhafte Ansteuern der Drucküberwachungseinrichtung 32 mittels der Steuereinrichtung 38 ist die von der Drucküberwachungseinrichtung 32 ausgeführte Drucküberwachung/Bremskraftverstärker-Überwachung in Situationen ausblendbar, in welchen damit zu rechnen ist, dass eine auf ein Betätigen des Bremsbetätigungselements zurückführbare Druckabweichung von dem Soll-Größenbereich 34 in der Druckkammer 16 vorliegt. Auf diese Weise ist verlässlich verhinderbar, dass die auf das Betätigen des Bremsbetätigungselements zurückzuführende Druckabweichung fälschlicherweise als Fehlererkennung/Fehleranzeichen/Fehlerauswirkung gedeutet wird. Somit ist gewährleistbar, dass nur bei einem tatsächlichen Vorliegen eines Fehlers am Bremskraftverstärker eine Fehlererkennung ausgeführt wird.

Eine Situation mit einer nicht-fehlerbedingten Druckabweichung liegt beispielsweise bei einem permanenten Betätigen und Lösen des Bremsbetätigungselements vor. Durch diese Modulation kann der in der Druckkammer 16 vorliegende Druck (signifikant) von dem vorgegebenen Soll-Größenbereich 34 abweichen, obwohl der Bremskraftverstärker in einem funktionsfähigen Zustand vorliegt. Beispielsweise kann ein in der Druckkammer 16 erwünschtes Vakuum auch ohne einen Fehler bei einem permanenten Betätigen und Lösen des Bremsbetätigungselements so stark abgesenkt werden, dass eine Fehlerschwelle des Soll-Größenbereichs 34 erreicht/überschritten wird.

Mittels eines Einsatzes der Bremsbetätigungs-Erkennvorrichtung 10 und der Steuereinrichtung 38 kann das permanente Betätigen und Lösen des Bremsbetätigungselements jedoch sicher erkannt werden und die Drucküberwachungseinrichtung 32 korrespondierend dazu deaktiviert werden. Auf diese Weise ist beispielsweise verhinderbar, die elektrische Vakuumpumpe deaktiviert wird, obwohl kein Fehler an dem Bremskraftverstärker vorliegt. Dies führt zur Vermeidung einer Situation, in welcher aufgrund des durch die fälschliche Fehlererkennung bedingten Deaktivierens der elektrischen Vakuumpumpe der Fahrer lediglich mit einem größeren Kraftaufwand das Fahrzeug abbremsen kann und/oder einer Deaktivierung einer Start-Stopp-Funktionalität größere Schadstoffemissionen und/oder ein höherer Energieverbrauch des Fahrzeugs in Kauf genommen werden müssen.

Die Steuereinrichtung 38 kann beispielsweise dazu ausgelegt sein, bei einem Empfang des Über-Mindestbetätigung-Informationssignal als Informationssignal 25 (für ein bestimmtes Mindestzeitintervall) die Drucküberwachungseinrichtung 32 zumindest für eine vorgegebene Mindestbetriebszeit aus dem ersten Betriebsmodus in den zweiten Betriebsmodus zu steuern. Somit kann bereits bei einem einmaligen Erkennen einer Änderungsgröße 14 außerhalb des Vergleichsgrößenbereichs 20 die von der Drucküberwachungseinrichtung 32 ausgeführte Drucküberwachung in der Druckkammer 16 deaktiviert werden.

Als Alternative zu der in dem vorausgehenden Absatz beschriebenen Ausführungsform kann die Steuereinrichtung 38 auch dazu ausgelegt sein, eine Anzahl der innerhalb eines vorgegebenen Zeitintervalls als Informationssignale 24 empfangene Über-Mindestbetätigung-Informationssignale zu ermitteln, und, mit einer vorgegebenen Höchstanzahl zu vergleichen. Sofern die ermittelte Anzahl zumindest der Höchstanzahl entspricht, kann die Steuereinrichtung 38 dazu ausgelegt sein, die Drucküberwachungseinrichtung 32 aus dem ersten Betriebsmodus in den zweiten Betriebsmodus zu steuern. Die von der Drucküberwachungseinrichtung 32 ausgeführte Bremskraftverstärker-Überwachung/Drucküberwachung wird in diesem Fall nicht bei einem erstmaligen Überschreiten eines Grenzwerts des Vergleichsgrößenbereichs 20 durch die Änderungsgröße 14 gestoppt/deaktiviert, sondern erst, wenn es zu einem mehrfachen Wechsel von extrem hohen und niedrigen Werten der Änderungsgröße 14 kommt. Die Überwachungsvorrichtung 30 kann somit auch mit einem Bremskraftverstärker zusammenwirken, dessen Druckkammer 16 und/oder Druckaufbausystem so ausgelegt ist, dass eine einmalige Betätigung des Bremsbetätigungselements nicht/kaum zu einer signifikanten Änderung des Drucks in der Druckkammer 16 führt. (Ein mehrmaliges Betätigen/häufiges Betätigen des Bremsbetätigungselements innerhalb des vorgegebenen Zeitintervalls kann den in der Druckkammer 16 vorliegenden Druck jedoch signifikant ändern.) Die hier wiedergegebene Überwachungsvorrichtung 30 kann somit mit einer Vielzahl von unterschiedlich ausgelegten Bremskraftverstärkern zusammenwirken.

Die oben beschriebenen Vorteile sind auch bei einem mit der Überwachungsvorrichtung 30 ausgestatteten Steuergerät gewährleistet. Das Steuergerät kann insbesondere als Verbrennungsmotor-Steuergerät, als Elektromotor-Steuergerät und/oder als ESP-Steuergerät ausgebildet sein. Außerdem kann das Steuergerät auch als Power-Management für ein Elektro-Fahrzeug ausgebildet sein. Die Überwachungsvorrichtung 30 ist somit auf bauraumsparende Weise in eine Vielzahl von Steuergeräten integrierbar.

Die genannten Vorteile werden auch realisiert durch ein mit der Bremsbetätigungs-Erkennvorrichtung 10, der Überwachungsvorrichtung 30 oder einem entsprechenden Steuergerät ausgestatteten Bremssystem. Dabei ist das vorteilhafte Bremssystem nicht auf eine bestimmte Auslegung beschränkt. Auf den Aufbau und die Komponenten des vorteilhaften Bremssystems wird deshalb hier nicht weiter eingegangen.

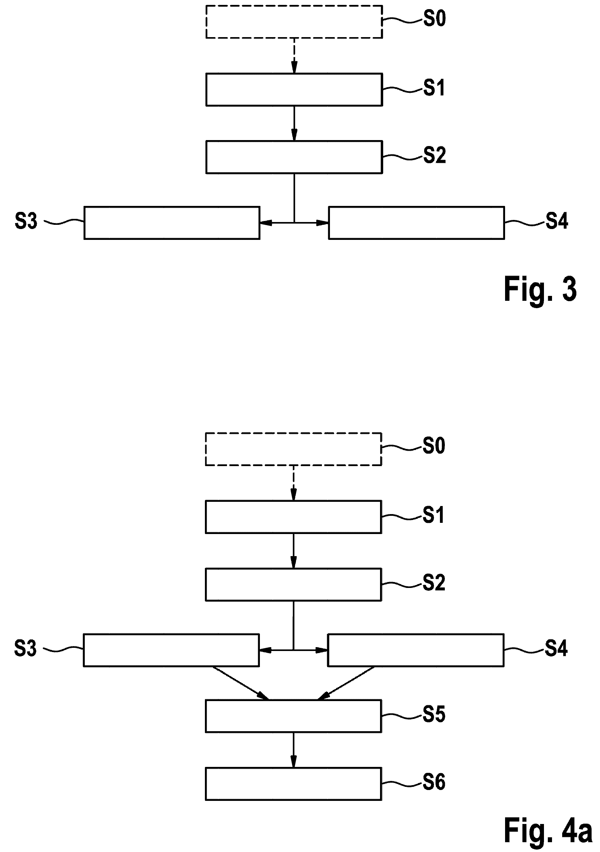

Fig. 3 zeigt ein Flussdiagramm zum Darstellen einer Ausführungsform des Verfahrens zum Feststellen einer Betätigung eines Bremsbetätigungselements eines Bremssystems.

Das nachfolgend beschriebene Verfahren ist beispielsweise mittels der oben erläuterten Bremsbetätigungs-Erkennvorrichtung oder mittels der entsprechenden Überwachungsvorrichtung ausführbar. Es wird jedoch darauf hingewiesen, dass die Ausführbarkeit des Verfahrens nicht auf eine Verwendung der oben beschriebenen Ausführungsformen limitiert ist.

In einem Verfahrensschritt S1 wird mindestens eine Änderungsgröße bezüglich einer zeitlichen Änderung einer Ist-Größe bezüglich eines in einer Druckkammer eines Bremskraftverstärkers eines Bremssystems vorliegenden Drucks ermittelt. Beispielsweise wird in dem Verfahrensschritt S1 eine zeitliche Ableitung/ein Gradient der Ist-Größe bezüglich des in der Druckkammer des Bremskraftverstärkers vorliegenden Drucks als Änderungsgröße ermittelt. Als Änderungsgröße kann jedoch auch eine Differenz zwischen zwei nacheinander ermittelten Ist-Größen festgelegt und mittels der nachfolgend beschriebenen Verfahrensschritte ausgewertet werden.

Vor dem Verfahrensschritt S1 kann optionaler Weise noch ein Verfahrensschritt S0 ausgeführt werden. In dem Verfahrensschritt S0 kann beispielsweise ein Differenzdruck einer als Vakuumkammer ausgebildeten Druckkammer des Bremskraftverstärkers gegenüber einem Atmosphärendruck als Ist-Größe bezüglich des in der Druckkammer des Bremskraftverstärkers vorliegenden Drucks ermittelt werden. Als Alternative oder als Ergänzung kann als Ist-Größe bezüglich des in der Druckkammer des Bremskraftverstärkers vorliegenden Drucks auch ein Differenzdruck einer als Arbeitskammer ausgebildeten Druckkammer des Bremskraftverstärkers gegenüber dem Atmosphärendruck ermittelt werden. Des Weiteren kann auch eine zu dem Druck in der Druckkammer verlässlich korrelierende (Mess-)Größe als Ist-Größe festgelegt und ausgewertet werden.

Nach dem oben schon beschriebenen Verfahrensschritt S1 wird ein Verfahrensschritt S2 ausgeführt. In dem Verfahrensschritt S2 wird die mindestens eine ermittelte Änderungsgröße mit einem vorgegebenen Vergleichsgrößenbereich verglichen. Der vorgegebene Vergleichsgrößenbereich ist vorzugsweise so festgelegt, dass mit einem Abweichen der Änderungsgröße von dem vorgegebenen Vergleichsgrößenbereich nur zu rechnen ist, sofern eine Betätigung des Bremsbetätigungselements mit zumindest einer bestimmten Mindestbetätigungsstärke erfolgt. Der vorgegebene Vergleichsgrößenbereich, bzw. seine Grenzwerte, kann insbesondere zu einer Mindestbetätigungsstärke/einem Mindestbetätigungszustand bei der Betätigung des Bremsbetätigungselements so entsprechen, dass die ermittelte Änderungsgröße erst bei einem Überschreiten der Mindestbetätigungsstärke/ab einem Betätigen des Bremsbetätigungselements über den Mindestbetätigungszustand (mit einer hohen Wahrscheinlichkeit) außerhalb des Vergleichsgrößenbereichs liegt.

Sofern in dem Verfahrensschritt S2 festgestellt wird, dass die mindestens eine ermittelte Änderungsgröße in dem Vergleichsbereich liegt, wird ein Verfahrensschritt S3 ausgeführt. In dem Verfahrensschritt S3 wird festgelegt, dass ein an dem Bremssystem angeordnetes Bremsbetätigungselement in einem Betätigungszustand unter einem vorgegebenen Mindestbetätigungszustand liegt. Man kann dies auch so umschreiben, dass in dem Verfahrensschritt S3 ein Festlegen einer aktuell ausgeführten Bremsbetätigungsstärke an dem Bremsbetätigungselement über einer zu dem Vergleichsgrößenbereich korrelierenden Mindestbetätigungsstärke erfolgt.

Sofern bei dem Vergleich der mindestens einen ermittelten Änderungsgröße mit dem vorgegebenen Vergleichsgrößenbereich in dem Verfahrensschritt S2 festgestellt wird, dass die mindestens eine bereitgestellte Änderungsgröße von dem Vergleichsgrößenbereich abweicht, wird ein Verfahrensschritt S4 ausgeführt. Der Verfahrensschritt S4 beinhaltet ein Festlegen, dass das Bremsbetätigungselement in einem Betätigungszustand über dem vorgegebenen Mindestbetätigungszustand vorliegt. Dies ist auch so umschreibbar, dass eine aktuell ausgeführte Bremsbetätigungsstärke über der zu dem Vergleichsgrößenbereich korrelierenden Mindestbetätigungsstärke festgelegt wird.

Man kann das in den oberen Absätzen beschriebene Verfahren auch als eine Logik umschreiben, welche anhand eines gemessenen Differenzdruckverlaufs abschätzt, ob das an dem Bremssystem angeordnete Bremsbetätigungselement zumindest in dem vorgegebenen Mindestbetätigungszustand vorliegt, bzw. mit einer vorgegebenen Mindestbetätigungsstärke betätigt wird. Das Verfahren zum Feststellen einer Betätigung eines Bremsbetätigungselements eines Bremssystems realisiert somit die oben bereits beschriebenen Vorteile. Auf eine erneute Wiederholung dieser Vorteile wird hier verzichtet.

Fig. 4a bis 4c zeigen ein Flussdiagramm und zwei Koordinatensysteme zum Darstellen einer ersten Ausführungsform des Verfahrens zur Drucküberwachung in einer Druckkammer eines Bremskraftverstärkers.

Das in Fig. 4a als Flussdiagramm wiedergegebene Verfahren umfasst die oben schon beschriebenen Verfahrensschritte S1 bis S4. Optionaler Weise kann das Verfahren auch den oben ausgeführten Verfahrensschritt S0 aufweisen.

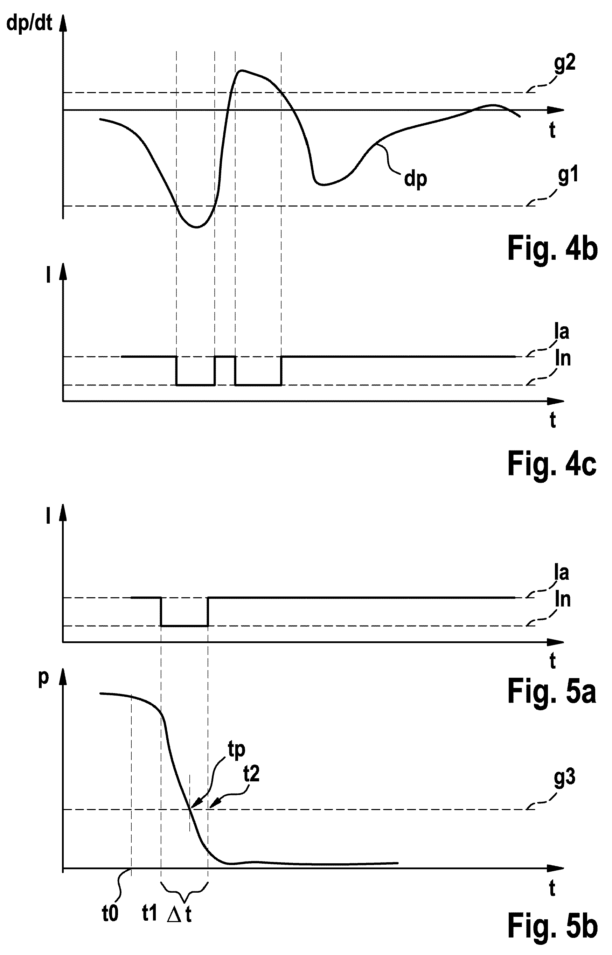

Fig. 4b gibt einen zeitlichen Verlauf der in dem Verfahrensschritt S1 ermittelten Änderungsgröße als Graph dp (Druckgradient) wieder, wobei die Abszisse die Zeitachse t und die Ordinate eine Drucksteigerung dp/dt sind. In Fig. 4b ist auch der in dem Verfahrensschritt S2 zum Vergleich herangezogene Vergleichsgrößenbereich mittels der beiden Grenzwerte g1 und g2 wiedergegeben. Der untere erste Grenzwert g1 (erster Gradienten-Schwellwert) kann beispielsweise bei -250 mbar/sec (Millibar pro Sekunde) liegen. Für den oberen zweiten Grenzwert g2 (zweiten Gradienten-Schwellwert) kann ein Wert von beispielsweise 10 mbar/sec herangezogen werden. Die hier genannten Zahlenwerte sind jedoch nur beispielhaft zu interpretieren. (Die Grenzwerte g1 und g2 können insbesondere projektspezifisch angepasst werden.)

Ein Unterschreiten des unteren ersten Grenzwerts g1 durch die Änderungsgröße deutet darauf hin, dass aufgrund einer (deutlichen) Betätigung des Bremsbetätigungselements eine signifikante Änderung des Drucks in der Druckkammer des Bremskraftverstärkers eingetreten ist. Somit ist es vorteilhaft, in diesem Fall ein Abweichen der Änderungsgröße von dem Vergleichsgrößenbereich (Verfahrensschritt S4) festzustellen/festzulegen.

Es wird darauf hingewiesen, dass der Vergleichsgrößenbereich auch einen oberen zweiten Grenzwert g2 haben kann. Auch ein Überschreiten des oberen zweiten Grenzwerts g2 durch die Änderungsgröße kann als vorangegangene Betätigung des Bremsbetätigungselements gedeutet werden, welche eine Aktivierung einer Druckeinstelleinrichtung, wie z.B. einer Pumpe, ausgelöst hat, wodurch der Differenzdruck in der Druckkammer des Bremskraftverstärkers (stark) zunimmt. (Außerdem deutet ein Überschreiten des oberen zweiten Grenzwerts g2 durch die Änderungsgröße mit einer hohen Wahrscheinlichkeit darauf hin, dass die Druckeinstellvorrichtung des Bremskraftverstärkers verlässlich arbeitet. Es ist deshalb sinnvoll, in einer derartigen Situation auf bestimmte Überwachungsfunktionen, wie beispielsweise einem Überwachen eines Drucks/einer Druckeinstellung in der Druckkammer des Bremskraftverstärkers, (vorübergehend) zu verzichten. Sofern das Berücksichtigen des oberen zweiten Grenzwerts g2 jedoch nicht gewünscht wird, kann der Vergleichsgrößenbereich jedoch lediglich den unteren ersten Grenzwert g1 haben.

Das Verfahren zur Drucküberwachung weist auch einen Verfahrensschritt S5 auf, welcher nach den Verfahrensschritten S3 oder S4 ausgeführt wird, sofern das Bremsbetätigungselement in einem Betätigungszustand unter dem vorgegebenen Mindestbetätigungszustand vorliegt oder innerhalb eines vorgegebenen Zeitintervalls seltener als eine vorgegebene Höchstanzahl in dem Betätigungszustand über dem vorgegebenen Mindestbetätigungszustand vorliegt. Somit hat man beim Ausführen des hier wiedergegebenen Verfahrens die Wahlmöglichkeit, ob bereits ein einmaliges Ermitteln des Bremsbetätigungselement in einem Betätigungszustand über dem vorgegebenen Mindestbetätigungszustand zu einem Unterlassen des Verfahrensschritts S5 führt, oder ob mit dem Aussetzen des Verfahrensschritts S5 gewartet wird, bis innerhalb des vorgegebenen Zeitintervalls das Bremsbetätigungselement zumindest mit der vorgegebenen Höchstanzahl in einem Betätigungszustand über dem vorgegebenen Mindestbetätigungszustand vorliegt. Sofern der Verfahrensschritt S5 unterlassen/ausgesetzt wird, kann das Verfahren sofort abgebrochen werden. Außerdem kann in diesem Fall nach einem Abwarten einem vorgegebenen Wartezeitintervall das Verfahren erneut gestartet werden.

In dem Verfahrensschritt S5 wird die Ist-Größe bezüglich des in der Druckkammer des Bremskraftverstärkers vorliegenden Drucks mit einem vorgegebenen Soll-Größenbereich verglichen. Aufgrund der Abhängigkeit eines Ausführens des Verfahrensschritts S5 von dem in den Verfahrensschritten S3 oder S4 festgestellten Betriebszustand des Bremsbetätigungselements kann somit bereits ein einmaliges Ermitteln des Bremsbetätigungselements in einem Betätigungszustand über dem vorgegebenen Mindestbetätigungszustand zu einem Abbruch einer Drucküberwachung in der Druckkammer des Bremskraftverstärkers führen. Als Alternative dazu kann Drucküberwachung in der Druckkammer des Bremskraftverstärkers auch nur in solchen Situationen ausgesetzt werden, in welchen das Bremsbetätigungselement innerhalb des vorgegebenen Zeitintervalls zumindest mit der vorgegebenen Höchstanzahl in einem Betätigungszustand über dem vorgegebenen Mindestbetätigungszustand vorliegt. Somit kann die Drucküberwachung in einer Situation, in welcher aufgrund einer (einmaligen oder häufigen) Betätigung des Bremsbetätigungselements mit einer fälschlichen Fehlererkennung zu rechnen ist, ausgesetzt werden. Auch das hier beschriebene Verfahren ist somit für eine Vielzahl von verschiedenen Bremskraftverstärkerauslegungen optimierbar.

Sofern in dem Verfahrensschritt S5 festgestellt wird, dass die bereitgestellte Ist-Größe von dem vorgegebenen Soll-Größenbereich zumindest mit einer vorgegebenen Höchstabweichungshäufigkeit abweicht, wird ein Verfahrensschritt S6 durchgeführt. Andernfalls kann das Verfahren (ohne den Verfahrensschritt S6) abgebrochen werden. Vorzugsweise erfolgt auch in diesem Fall ein Wiederholen des Verfahrens nach einem Abwarten des vorgegebenen Wartezeitintervalls.

In dem Verfahrensschritt S6 wird eine Druckabweichungs- und/oder Warninformation ausgegeben. Somit kann mittels eines Ausführens des Verfahrens die vorteilhafte Druckabweichungs- und/oder Warninformation bereitgestellt werden.

Die Verfahrensschritte S5 und S6 können beispielsweise mittels der oben schon beschriebenen Drucküberwachungseinrichtung ausgeführt werden. Dazu kann die Drucküberwachungseinrichtung mittels eines Signals I angesteuert werden, welches die Ordinate des Koordinatensystems der Fig. 4c ist. Die Abszisse des Koordinatensystems der Fig. 4c ist die Zeitachse t.

Sofern die in der Fig. 4b wiedergegebene Änderungsgröße dp innerhalb eines von den Grenzwerten d1 und d2 definierten Bandes liegt, wird (in dem Verfahrensschritt S3) ein ausreichend hohes Signal la bereitgestellt und zumindest der Verfahrensschritt S5/die Überwachung der Ist-Größe wird ausgeführt. Bei einer Änderungsgröße dp außerhalb des Bandes kann von einer (schnellen) Bremsbetätigung oder einem (schnellen) Lösen des Bremsbetätigungselements ausgegangen werden. Entsprechend wird in dem Verfahrensschritt S4 ein nicht-ausreichendes Signal In bereitgestellt. Dies bewirkt ein Unterlassen/Aussetzen des Verfahrensschritts S5/der Überwachung der Ist-Größe.

Wie man anhand der Fig. 4b erkennen kann, wechselt die Änderungsgröße dp bei einem ständigen Betätigen und Lösen der Bremse mit mittlerer Frequenz zwischen großen und kleinen Werten. Für eine verlässliche Fehlererkennung kann ein Fehlerzähler bei einer Änderungsgröße dp außerhalb der Grenzwerte g1 und g2 wieder neu gestartet werden. (Treten signifikant hohe Werte für die mindestens eine Änderungsgröße dp auf, so ist dies ein Zeichen, dass eine Evakuierung/ein Druckaufbau möglich ist, und deshalb kein Fehler an der Druckeinstelleinrichtung des Bremskraftverstärkers oder an der Druckkammer vorliegen kann).

Bei einer hohen Betätigungsfrequenz des Bremsbetätigungselements kann es sein, dass es keine deutlichen Phasen einer Druckerholung/Vakuumerholung gibt. Dafür liegen aber die niedrigen ermittelten Werte der Änderungsgröße dp so nahe aneinander, dass die Überwachung immer wieder deaktiviert/gestoppt wird und aufgrund eines damit verbundenen wiederholten Startens des Fehlerzählers mit einer verlässlichen Fehlererkennung zu rechnen ist.

Fig. 5a und 5b zeigen zwei Koordinatensysteme zum Darstellen einer zweiten Ausführungsform des Verfahrens zur Drucküberwachung in einer Druckkammer eines Bremskraftverstärkers.

Als Abszissen weisen die beiden Koordinatensysteme der Fig. 5a und 5b die Zeitachse t auf. Die Ordinate des Koordinatensystems der Fig. 5a ist das oben schon beschriebene Signal I. In dem Koordinatensystem der Fig. 5b gibt die Ordinate einen Differenzdruck p zwischen einem Atmosphärendruck und einem in der Druckkammer des Bremskraftverstärkers vorliegenden Unterdruck/Vakuum wieder. (Ein hoher Wert des Differenzdrucks p deutet somit auf ein in der Druckkammer vorliegendes Vakuum.) Der in Fig. 5b eingetragene (untere) Grenzwert g3 korrespondiert zu dem zum Vergleich des Differenzdrucks p herangezogenen Soll-Größenbereichs. Ab einem Differenzdruck p unter dem Grenzwert g3 kann mit einer hohen Wahrscheinlichkeit von einem signifikanten Vakuumverlust in der Druckkammer ausgegangen werden.

Kommt es ab einem Zeitpunkt t0 zu einem schnellen Vakuumverlust, so treten ab einer Zeit t1 extrem niedrige Werte (unter Null mit hohem Betrag) für die Änderungsgröße auf. Erst ab einer Zeit t2 ist der Vakuumverlust bereits so weit fortgeschritten, dass der Druck in der Druckkammer nahezu dem Atmosphärendruck entspricht. Somit treten ab der Zeit t2 nur Änderungsgrößen mit einem niedrigen Betrag auf. Man kann dies auch so umschreiben, das die Änderungsgröße bei einem schnellen Vakuumverlust in der Regel erst gegen Null geht, wenn kein Unterdruck mehr vorhanden ist.

In einem Aussetzungs-Zeitintervall Δt zwischen den Zeiten t1 und t2 liegt die (signifikant kleine) Änderungsgröße außerhalb des Vergleichsgrößenbereichs. Deshalb wird in dem Aussetzungs-Zeitintervall Δt auch kein Vergleich des Differenzdrucks p mit dem Grenzwert g3 ausgeführt. Somit wird zur Zeit tp in dem Aussetzungs-Zeitintervall Δt auch nicht erkannt, dass der Differenzdrucks p unter den dritten Grenzwert g3 fällt. Allerdings liegt zwischen den Zeiten tp und t2 nur eine geringe zeitliche Differenz, beispielsweise 1,5 Sekunden. Somit kann man trotz der Verzögerung der Differenzdruck-Überwachung während des Aussetzungs-Zeitintervalls Δt den an dem Bremskraftverstärker, der Druckeinstelleinrichtung und/oder der Druckkammer auftretenden Fehler relativ schnell erkennen. Damit hat man rechtzeitig die Möglichkeit, mittels der Druckabweichungs- und/oder Warninformation dem Fehler entgegenwirken, die Auswirkungen des Fehlers zumindest teilweise zu kompensieren oder den Fahrer bezüglich des Fehlers zu informieren.

Bei einem schleichenden Vakuumverlust liegt die Änderungsgröße innerhalb des vorgegebenen Vergleichswertebereichs. Es tritt deshalb in diesem Fall keine Verzögerung der Fehlererkennung auf.

Wie anhand der Koordinatensysteme der Fig. 5a und 5b zu erkennen ist, können mittels des hier wiedergegebenen Verfahrens nicht nur ein einen schleichenden Vakuumverlust bedingender Fehler, sondern auch ein einen schnellen Vakuumverlust auslösender Fehler (verlässlich) erkannt werden.

## Patentansprüche

1. Bremsbetätigungs-Erkennvorrichtung (10) mit:
einer Auswerteeinrichtung (12), mittels welcher mindestens eine bereitgestellte Änderungsgröße (14, dp) bezüglich einer zeitlichen Änderung einer Ist-Größe (28, p) bezüglich eines in einer Druckkammer (16) eines Bremskraftverstärkers eines Bremssystems vorliegenden Drucks mit einem vorgegebenen Vergleichsgrößenbereich (20, g1, g2) vergleichbar ist, wobei, sofern die mindestens eine bereitgestellte Änderungsgröße (14, dp) in dem Vergleichsgrößenbereich (20, g1, g2) liegt, festlegbar ist, dass ein an dem Bremssystem angeordnetes Bremsbetätigungselement in einem Betätigungszustand unter einem vorgegebenen Mindestbetätigungszustand vorliegt, und ein entsprechendes Unter-Mindestbetätigung-Informationssignal als Informationssignal (24) ausgebbar ist, und, sofern die mindestens eine bereitgestellte Änderungsgröße (14, dp) von dem Vergleichsgrößenbereich (20, g1, g2) abweicht, festlegbar ist, dass das Bremsbetätigungselement in einem Betätigungszustand über dem vorgegebenen Mindestbetätigungszustand vorliegt, und ein entsprechendes Über-Mindestbetätigung-Informationssignal als Informationssignal (24) ausgebbar ist.

2. Bremsbetätigungs-Erkennvorrichtung (10) nach Anspruch 1, wobei die Bremsbetätigungs-Erkennvorrichtung (10) eine Differenziereinrichtung (26) umfasst, mittels welcher eine zeitliche Ableitung (14, dp) der bereitgestellten Ist-Größe (28, dp) bezüglich des in der Druckkammer (16) des Bremskraftverstärkers vorliegenden Drucks als Änderungsgröße (14, dp) festlegbar und an die Auswerteeinrichtung (12) bereitstellbar ist.

3. Überwachungsvorrichtung (30) für einen Bremskraftverstärker mit einer Druckkammer (16) mit:
einer Bremsbetätigungs-Erkennvorrichtung (10) nach Anspruch 1 oder 2;
einer Drucküberwachungseinrichtung (32), welche in einem ersten Betriebsmodus dazu ausgelegt ist, die bereitgestellte Ist-Größe (28, p) bezüglich des in der Druckkammer (16) des Bremskraftverstärkers vorliegenden Drucks mit einem vorgegebenen Soll-Größenbereich (34, g3) zu vergleichen, und, sofern die bereitgestellte Ist-Größe (28, p) von dem vorgegebenen Soll-Größenbereich (34, g3) abweicht, eine entsprechende Druckabweichungs- und/oder Warninformation (36) auszugeben, wobei die Drucküberwachungseinrichtung (32), zusätzlich in einen zweiten Betriebsmodus steuerbar ist, in welchem trotz mindestens einer von dem vorgegebenen Soll-Größenbereich (34, g3) abweichenden Ist-Größe (28, p), eine Ausgabe der Druckabweichungs- und/oder Warninformation (36) unterbunden ist; und
einer Steuereinrichtung (38), mittels welcher die Drucküberwachungseinrichtung (32) unter Berücksichtigung des von der Bremsbetätigungs-Erkennvorrichtung (10) ausgegebenen Informationssignals (24) zumindest in den ersten Betriebsmodus oder in den zweiten Betriebsmodus steuerbar ist.

4. Überwachungsvorrichtung (30) nach Anspruch 3, wobei die Steuereinrichtung (38) dazu ausgelegt ist, bei einem Empfang des Über-Mindestbetätigung-Informationssignals als Informationssignal (24) die Drucküberwachungseinrichtung (32) zumindest für eine vorgegebene Mindestbetriebszeit aus dem ersten Betriebsmodus in den zweiten Betriebsmodus zu steuern.

5. Überwachungsvorrichtung (30) nach Anspruch 3, wobei die Steuereinrichtung (38) dazu ausgelegt ist, eine Anzahl der innerhalb eines vorgegebenen Zeitintervalls als Informationssignale (24) empfangenen Über-Mindestbetätigung-Informationssignale zu ermitteln, und, sofern die ermittelte Anzahl zumindest einer Höchstanzahl entspricht, die Drucküberwachungseinrichtung (32) aus dem ersten Betriebsmodus in den zweiten Betriebsmodus zu steuern.

6. Steuergerät mit einer Überwachungsvorrichtung (30) nach einem der Ansprüche 3 bis 5.

7. Steuergerät nach Anspruch 6, wobei das Steuergerät als Verbrennungsmotor-Steuergerät, als Elektromotor-Steuergerät und/oder als ESP-Steuergerät ausgebildet ist.

8. Bremssystem mit einer Bremsbetätigungs-Erkennvorrichtung (10) nach einem der Ansprüche 1 oder 2, einer Überwachungsvorrichtung (30) nach einem der Ansprüche 3 bis 5 und/oder einem Steuergerät nach einem der Ansprüche 6 oder 7.

9. Verfahren zum Feststellen einer Betätigung eines Bremsbetätigungselements eines Bremssystems mit den Schritten:
Ermitteln mindestens einer Änderungsgröße (14, dp) bezüglich einer zeitlichen Änderung einer Ist-Größe (28, p) bezüglich eines in einer Druckkammer (16) eines Bremskraftverstärkers eines Bremssystems vorliegenden Drucks (S1);
Vergleichen der mindestens einen ermittelten Änderungsgröße (14, dp) mit einem vorgegebenen Vergleichsgrößenbereich (20, g1, g2) (S2); und
sofern die mindestens eine ermittelte Änderungsgröße (14, dp) in dem Vergleichsgrößenbereich (20, g1, g2) liegt, Festlegen, dass ein an dem Bremssystem angeordnetes Bremsbetätigungselement in einem Betätigungszustand unter einem vorgegebenen Mindestbetätigungszustand vorliegt (S3);
sofern die mindestens eine bereitgestellte Änderungsgröße (14, dp) von dem Vergleichsgrößenbereich (20, g1, g2) abweicht, Festlegen, dass das Bremsbetätigungselement in einem Betätigungszustand über dem vorgegebenen Mindestbetätigungszustand vorliegt (S4).

10. Verfahren nach Anspruch 9, wobei als Änderungsgröße (14, dp) eine zeitliche Ableitung (14, dp) der Ist-Größe (28, p) bezüglich des in der Druckkammer(16) des Bremskraftverstärkers vorliegenden Drucks ermittelt wird (S0).

11. Verfahren nach Anspruch 10, wobei als Ist-Größe (p) bezüglich des in der Druckkammer (16) des Bremskraftverstärkers vorliegenden Drucks ein Differenzdruck (p) einer als Vakuumkammer ausgebildeten Druckkammer (16) des Bremskraftverstärkers gegenüber einem Atmosphärendruck ermittelt wird.

12. Verfahren nach Anspruch 10 oder 11, wobei als Ist-Größe bezüglich des in der Druckkammer (16) des Bremskraftverstärkers vorliegenden Drucks ein Differenzdruck einer als Arbeitskammer ausgebildeten Druckkammer des Bremskraftverstärkers gegenüber dem Atmosphärendruck ermittelt wird.

13. Verfahren zur Drucküberwachung in einer Druckkammer (16) eines Bremskraftverstärkers mit den Schritten:
Ausführen des Verfahren zum Feststellen einer Betätigung eines Bremsbetätigungselements eines Bremssystems nach einem der Ansprüche 9 bis 12; und
sofern das Bremsbetätigungselement in einem Betätigungszustand unter dem vorgegebenen Mindestbetätigungszustand vorliegt oder innerhalb eines vorgegebenen Zeitintervalls das Bremsbetätigungselement seltener als eine vorgegebene Höchstanzahl in einem Betätigungszustand über dem vorgegebenen Mindestbetätigungszustand vorliegt, Vergleichen der Ist-Größe (28, p) bezüglich des in der Druckkammer (16) des Bremskraftverstärkers vorliegenden Drucks mit einem vorgegebenen Soll-Größenbereich (34, g3) (S5) und, sofern die bereitgestellte Ist-Größe (28, p) zumindest mit einer vorgegebenen Höchstabweichungshäufigkeit von dem vorgegebenen Soll-Größenbereich (34, g3) abweicht, Ausgeben einer Druckabweichungs- und/oder Warninformation (S6).

## Claims

1. Brake actuation detection device (10) having:
an evaluation apparatus (12) by means of which at least one supplied change variable (14, dp) relating to a change in an actual variable (28, p) over time relating to a pressure present in a pressure chamber (16) of a brake booster of a brake system can be compared with a predefined comparison variable range (20, g1, g2), wherein if the at least one supplied change variable (14, dp) lies in the comparison variable range (20, g1, g2), it is possible to determine that a brake actuation element which is arranged on the brake system is in an actuation state below a predefined minimum actuation state, and a corresponding sub-minimum actuation information signal can be output as an information signal (24), and if the at least one supplied change variable (14, dp) differs from the comparison variable range (20, g1, g2), it is possible to determine that the brake actuation element is in an actuation state above the predefined minimum actuation state and a corresponding super-minimum actuation information signal can be output as an information signal (24).

2. Brake actuation detection device (10) according to Claim 1, wherein the brake actuation detection device (10) comprises a differentiating device (26) by means of which a time derivative (14, dp) of the supplied actual variable (28, dp) relating to the pressure present in the pressure chamber (16) of the brake booster can be determined as a change variable (14, dp) and supplied to the evaluation device (12).

3. Monitoring device (30) for a brake booster with a pressure chamber (16) with:
a brake actuation detection device (10) according to Claim 1 or 2;
a pressure monitoring apparatus (32) which is configured in a first operating mode, to compare the supplied actual variable (28, p) relating to the pressure present in the pressure chamber (16) of the brake booster with a predefined setpoint variable range (34, g3) and, if the supplied actual variable (28, p) differs from the predefined setpoint variable range (34, g3), to output a corresponding pressure difference information item and/or warning information item (36), wherein the pressure monitoring apparatus (32) can additionally be controlled in a second operating mode in which, despite at least one actual variable (28, p) which differs from the predefined setpoint variable range (34, g3), outputting of the pressure difference information item and/or warning information item (36) is prohibited; and
a control apparatus (38) by means of which the pressure monitoring apparatus (32) can be controlled at least into the first operating mode or into the second operating mode taking into account the information signal (24) which is output by the brake actuation detection device (10).

4. Monitoring device (30) according to Claim 3, wherein the control apparatus (38) is configured, in the event of reception of the super-minimum actuation information signal as an information signal (24), to control the pressure monitoring apparatus (32) from the first operating mode into the second operating mode at least for a predefined minimum operating time.

5. Monitoring device (30) according to Claim 3, wherein the control apparatus (38) is configured to determine a number of the super-minimum actuation information signals received as information signals (24) within a predefined time interval and, if the determined number corresponds at least to a maximum number, to control the pressure monitoring apparatus (32) from the first operating mode into the second operating mode.

6. Control unit having a monitoring device (30) according to one of Claims 3 to 5.

7. Control unit according to Claim 6, wherein the control unit is embodied as an internal combustion engine control unit, as an electric motor control unit and/or as an ESP control unit.

8. Brake system having a brake actuation detection device (10) according to one of Claims 1 and 2, a monitoring device (30) according to one of Claims 3 to 5 and/or a control unit according to one of Claims 6 and 7.

9. Method for detecting actuation of a brake actuation element of a brake system having the steps:
determining at least one change variable (14, dp) relating to a change in an actual variable (28, p) over time relating to a pressure (S1) present in a pressure chamber (16) of a brake booster of a brake system;
comparing the at least one determined change variable (14, dp) with a predefined comparison variable range (20, g1, g2) (S2) ; and
if the at least one determined change variable (14, dp) lies in the comparison variable range (20, g1, g2), determining that a brake actuation element, arranged on the brake system, is in an actuation state below a predefined minimum actuation state (S3);
if the at least one supplied change variable (14, dp) differs from the comparison variable range (20, g1, g2), determining that the brake actuation element is in an actuation state above the predefined minimum actuation state (S4).

10. Method according to Claim 9, wherein a time derivative (14, dp) of the actual variable (28, p) relating to the pressure present in the pressure chamber (16) of the brake booster is determined as the change variable (14, dp) (S0).

11. Method according to Claim 10, wherein a difference pressure (p) of a pressure chamber (16), embodied as a vacuum chamber, of the brake booster with respect to an atmospheric pressure is determined as an actual variable (p) relating to the pressure present in the pressure chamber (16) of the brake booster.

12. Method according to Claim 10 or 11, wherein a difference pressure of a pressure chamber, embodied as a working chamber, of the brake booster with respect to the atmospheric pressure is determined as the actual variable relating to the pressure present in the pressure chamber (16) of the brake booster.

13. Method for monitoring the pressure in a pressure chamber (16) of a brake booster having the steps:
carrying out the method for determining actuation of a brake actuation element of a brake system according to one of Claims 9 to 12; and
if the brake actuation element is in an actuation state below the predefined minimum actuation state or the brake actuation element is in an actuation state above the predefined minimum actuation state less frequently than a predefined maximum number within a predefined time interval, comparing the actual variable (28, p) relating to the pressure present in the pressure chamber (16) of the brake booster with a predefined setpoint variable range (34, g3)(S5) and, if the supplied actual variable (28, p) differs from the predefined setpoint variable range (34, g3) at least with a predefined maximum differing frequency, outputting a pressure difference information item and/or warning information item (S6).

## Revendications

1. Dispositif détecteur d'actionnement de frein (10) avec :
un dispositif d'analyse (12) à l'aide duquel au moins une grandeur de variation (14, dp) mise à disposition, relative à une variation dans le temps d'une grandeur réelle (28, p) par rapport à une pression régnant dans une chambre de pression (16) d'un amplificateur de force de freinage d'un système de freinage, peut être comparée à une plage de grandeurs de comparaison (20, g1, g2) prédéfinie, sachant que dans la mesure où l'au moins une grandeur de variation (14, dp) mise à disposition se situe dans la plage de grandeurs de comparaison (20, g1, g2), on peut déterminer qu'un élément d'actionnement de frein disposé au niveau du système de freinage est, dans un état d'actionnement, en dessous d'un état d'actionnement minimal prédéfini et un signal d'information d'actionnement sous le minimum correspondant peut être envoyé comme signal d'information (24) et, dans la mesure où l'au moins une grandeur de variation (14, dp) mise à disposition s'écarte de la plage de grandeurs de comparaison (20, g1, g2), on peut déterminer que l'élément d'actionnement de frein est dans un état d'actionnement au-dessus de l'état d'actionnement minimal prédéfini et le signal d'information au-dessus du minimum correspondant peut être envoyé comme signal d'information (24).

2. Dispositif détecteur d'actionnement de frein (10) selon la revendication 1, le dispositif détecteur d'actionnement de frein (10) comprenant un dispositif de différenciation (26) à l'aide duquel une dérivée dans le temps (14, dp) de la grandeur réelle (28, dp) mise à disposition par rapport à la pression régnant dans la chambre de pression (16) de l'amplificateur de force de freinage peut être déterminée comme grandeur de variation (14, dp) et être mise à la disposition du dispositif d'analyse (12).

3. Dispositif de surveillance (30) pour un amplificateur de force de freinage équipé d'une chambre de pression (16) avec :
un dispositif détecteur d'actionnement de frein (10) selon la revendication 1 ou 2 ;
un dispositif de surveillance de pression (32) conçu pour comparer, dans un premier mode de fonctionnement, la grandeur réelle (28, p) mise à disposition, relative à la pression régnant dans la chambre de pression (16) de l'amplificateur de force de freinage, avec une plage théorique de grandeurs (34, g3) prédéfinie et, dans la mesure où la grandeur réelle (28, p) mise à disposition s'écarte de la plage théorique de grandeurs (34, g3) prédéfinie, pour envoyer une information d'écart de pression et/ou d'avertissement (36) correspondante, le dispositif de surveillance de pression (32) pouvant en outre être commandé dans un deuxième mode de fonctionnement dans lequel malgré au moins une grandeur réelle (28, p) s'écartant d'une plage théorique de grandeurs (34, g3) prédéfinie, un envoi d'information d'écart de pression et/ou d'avertissement (36) est empêché ; et
un dispositif de commande (38) à l'aide duquel le dispositif de surveillance de pression (32) peut être commandé en tenant compte du signal d'information (24) envoyé par le dispositif détecteur d'actionnement de frein (10) au moins dans le premier mode de fonctionnement ou dans le deuxième mode de fonctionnement.

4. Dispositif de surveillance (30) selon la revendication 3, le dispositif de commande (38) étant conçu pour commander, en cas de réception du signal d'information au-dessus du minimum servant de signal d'information (24), le dispositif de surveillance de pression (32), au moins pour un temps de fonctionnement minimal prédéfini, pour l'amener du premier mode de fonctionnement dans le deuxième mode de fonctionnement.

5. Dispositif de surveillance (30) selon la revendication 3, le dispositif de commande (38) étant conçu pour calculer un nombre de signaux d'information d'actionnement au-dessus du minimum reçus à l'intérieur d'un intervalle de temps prédéfini servant de signaux d'information (24) et dans la mesure où ce nombre calculé correspond au moins à un nombre maximal, pour commander le dispositif de surveillance de pression (32) afin de passer du premier mode de fonctionnement dans le deuxième mode de fonctionnement.

6. Appareil de commande équipé d'un dispositif de surveillance (30) selon l'une quelconque des revendications 3 à 5.

7. Appareil de commande selon la revendication 6, l'appareil de commande étant réalisé sous la forme d'un appareil de commande de moteur à combustion interne, d'un appareil de commande de moteur électrique et/ou sous la forme d'un appareil de commande ESP.

8. Système de freinage équipé d'un dispositif détecteur d'actionnement de frein (10) selon l'une quelconque des revendications 1 ou 2, d'un dispositif de surveillance (30) selon l'une quelconque des revendications 3 à 5 et/ou d'un appareil de commande selon l'une quelconque des revendications 6 ou 7.

9. Procédé de détermination d'un actionnement d'un élément d'actionnement de frein de système de freinage avec les étapes suivantes :
calcul d'au moins une grandeur de variation (14, dp) relative à une variation dans le temps d'une grandeur réelle (28, p) par rapport à une pression régnant dans une chambre de pression (16) d'un amplificateur de force de freinage d'un système de freinage (S1) ;
comparaison de l'au moins une grandeur de variation (14, dp) calculée avec une plage de grandeurs de comparaison (20, g1, g2) prédéfinie (S2) ; et
dans la mesure où l'au moins une grandeur de variation (14, dp) calculée est dans la plage de grandeurs de comparaison (20, g1, g2), détermination qu'un élément d'actionnement de frein disposé au niveau du système de freinage est dans un état d'actionnement, en dessous d'un état d'actionnement minimal prédéfini (S3) ;
dans la mesure où l'au moins une grandeur de variation (14, dp) mise à disposition s'écarte de la plage de grandeurs de comparaison (20, g1, g2), détermination que l'élément d'actionnement de frein est dans un état d'actionnement au-dessus de l'état d'actionnement minimal prédéfini (S4).

10. Procédé selon la revendication 9, dans lequel on calcule comme grandeur de variation (14, dp) une dérivée dans le temps (14, dp) de la grandeur réelle (28, p) par rapport à la pression régnant dans la chambre de pression (16) de l'amplificateur de force de freinage (S0).

11. Procédé selon la revendication 10, dans lequel on calcule comme grandeur réelle (p) relative à la pression régnant dans la chambre de pression (16) de l'amplificateur de force de freinage une pression différentielle (p) d'une chambre de pression (16), réalisée sous la forme d'une chambre sous vide, de l'amplificateur de force de freinage par rapport à la pression atmosphérique.

12. Procédé selon la revendication 10 ou 11, sachant qu'on calcule comme grandeur réelle relative à la pression régnant dans la chambre de pression (16) de l'amplificateur de force de freinage une pression différentielle d'une chambre de pression, réalisée sous la forme d'une chambre de travail, de l'amplificateur de force de freinage par rapport à la pression atmosphérique.

13. Procédé de surveillance de pression dans une chambre de pression (16) d'un amplificateur de force de freinage avec les étapes suivantes :
mise en oeuvre du procédé de détermination d'un actionnement d'un élément d'actionnement de frein d'un système de freinage selon l'une quelconque des revendications 9 à 12 ; et
dans la mesure où l'élément d'actionnement de frein est dans un état d'actionnement en dessous de l'état d'actionnement minimal prédéfini ou dans la mesure où à l'intérieur d'un intervalle de temps prédéfini, l'élément d'actionnement de frein est plus rarement, sous la forme d'un nombre maximal prédéfini, dans un état d'actionnement au-dessus de l'état d'actionnement minimal prédéfini, comparaison de la grandeur réelle (28, p) relative à la pression régnant dans la chambre de pression (16) de l'amplificateur de force de freinage avec une plage théorique de grandeurs (34, g3) prédéfinie (S5) et dans la mesure où la grandeur réelle (28, p) mise à disposition s'écarte au moins avec une fréquence d'écartement maximale de la plage théorique de grandeurs (34, g3) prédéfinie, envoi d'une information d'écart de pression et/ou d'avertissement (S6).
